# EUROPÄISCHE PATENTANMELDUNG

(11) **EP 1 375 613 A1**
(43) Veröffentlichungstag der Anmeldung: **02.01.2004**
(21) Anmeldenummer: 02014414.3
(22) Anmeldetag: 28.06.2002
(51) Int. Cl.: C09D 167/00, C09D 175/04, B65D 41/02, B65D 51/24

(54) **Behälterverschluss versehen mit einer Antirutschbeschichtung**

(71) Anmelder: Carl Kühne KG(GmbH & Co.), 22761 Hamburg (DE); Mankiewicz Gebr. & Co. (GmbH & Co. KG), D-21107 Hamburg (DE)
(72) Erfinder: Haiser, Günter, 21036 Hamburg (DE); Albers, Torsten, 21255 Wistedt (DE)
(74) Vertreter: Schaeffer, Michael

(57) **Zusammenfassung**

Die Erfindung betrifft Behälterverschlüsse und ist gekennzeichnet durch eine Lackbeschichtung der Verschlüsse zur Antirutschausrüstung auf Basis von Polymeren aus gesättigten aliphatischen oder gemischt aliphatischaromatischen Polyestern mit einem mittleren Molekulargewicht von 5 - 15 · 10³ g/mol und blockierten oder nicht blockierten aromatischen oder cycloaliphatischen Isocyanaten, wobei der Reibungskoeffizient über 0,31 liegt.

## Beschreibung

Die Erfindung betrifft eine Antirutschbeschichtung für Behälterverschlüsse und Behälter.

Behälterverschlüsse werden in großem Ausmaß in der Lebensmittelindustrie verwendet, wobei unter Behälterverschlüssen im Folgendem vor allem Twist-Off-Verschlüsse für Flaschen oder Gläser, aber auch aufgebördelte Aufreißverschlüsse, wie sie vorzugsweise bei Getränkedosen und Konserven eingesetzt werden, aber auch andere Verschlußmittel verstanden werden. In der Regel werden derartige Behälterverschlüsse so hergestellt, daß die vom Walzwerk angelieferten Coils, also verzinnte Blechrollen, in einer Tafelschneidemaschine zu Tafeln von etwa 1m x 1m geschnitten und dann in einem zweiten Arbeitsgang auf einer Lackierlinie im Offsetdruckverfahren wie üblicherweise bedruckt werden, d.h. das Blech wird grundiert, dann wird der Lack aufgetragen und der Lack im Ofen getrocknet. Nach der Lackaufnahme werden die einseitig bedruckten Tafeln in einem weiteren Arbeitsschritt auf einer Lackierlinie mit einem Klarlack ganzflächig überzogen; dieser Lackauftrag dient im wesentlichen als Schutzlack für die starke Tiefziehbeanspruchung beim anschließenden Formen des Verschlusses in der Endfertigung.

Die so hergestellten Verschlüsse werden in der Lebensmittelindustrie nach dem Füllen des Behälters mit dem jeweiligen Füllgut auf entsprechenden automatisierten Verpackungsstraßen aufgesetzt und verschlossen. Die verschlossene Ware wird dann üblicherweise in sogenannte Trays verpackt, die dann in Folie eingeschweißt werden.

Der Lebensmitteleinzelhandel fordert für die Ausführung der Sekundärverpackung, d.h. für die die Gläser, Flaschen usw. aufnehmenden Trays immer mehr die Verwendung von Monomaterialien, also Ablösung von Niederbordtrays mit Folie durch Hochbordtrays ohne Folie bzw. Kartonverpackungen. Dabei erfüllt die in Schrumpffolie eingeschlagene Trayverpackung neben der Schutzfunktion hinsichtlich Diebstahl und Staubschutz auch im Verbund auf der Palette eine bedeutende rutschhemmende Funktion, d.h. die Folie verhindert ein Rutschen der aufeinander gestapelten Trays und gibt dem Verbund der Trays auf der Palette den notwendigen Halt. Bedingt durch die Ablösung dieser Verpackungsart und -weise und dem Einsatz von Hochbordtrays aus Monoverpackungsmaterial entfällt diese Sicherungsmöglichkeit und muß abgelöst werden durch spezielle imprägnierte Papier- bzw. Papp-Zwischenlagen zwischen den einzelnen Lagen der Trays auf der Palette. Nur durch eine spezielle Gummierung auf dem Zwischenlagenpapier kann eine rutschhemmende Wirkung zwischen den einzelnen Lagen und damit ein sicherer Transport inner- und außerbetrieblich gewährleistet werden.

Diese Zwischenlagen aus Wellpappe oder gummiertem Papier erhöhen das Abfallaufkommen, so daß ein Bedürfnis danach besteht, die bisher üblichen Verpackungsmethoden zu ändern und soweit wie möglich auf Zwischenlagen oder Folien zu verzichten.

Der Erfindung liegt daher die Aufgabe zugrunde, die Rutschfähigkeit von in geringen Schichtdicken lackierten Behälterverschlüssen zu verringern, um damit auch den Einsatz von anderem Verpackungsmaterial zu reduzieren, ohne die Verformbarkeit der Verschlüsse und die Verschlußherstellung zu beeinträchtigen.

Zur Lösung der Aufgabe werden Behälterverschlüsse, vorzugsweise aus Metall, vorgeschlagen, die dadurch gekennzeichnet sind, daß sie eine Schutzlackbeschichtung mit Antirutscheffekt auf Basis von Polymeren aus gesättigten aliphatischen oder gemischt aliphatisch-aromatischen Polyestern mit einem mittleren Molekulargewicht von 4 - 15 · 10³ g/mol und blockierten aromatischen oder cycloaliphatischen Polyisocyanaten aufweisen.

Überraschenderweise wurde festgestellt, daß die an eine Schutzlackschicht mit Antirutscheffekt zu stellenden, konträren Anforderungen, nämlich einerseits Verarbeitbarkeit auf den üblichen Maschinen für die Herstellung und Lackierung von Verschlüssen in der üblichen kurzen Zeitspanne, was vereinfacht gesagt, eine geringe Haftung des Lackes an Maschinenteilen usw. erfordert, und andererseits ein Antirutscheffekt, der eine starke Haftung dieser Beschichtung notwendig macht, erfüllen lassen, wenn anstelle der bisher üblichen Schutzbeschichtungen ein Lack auf Basis von speziellen Polymeren aus gesättigten aliphatischen oder gemischt aliphatisch-aromatischen Polyestern und blockierten aromatischen oder cycloaliphatischen Isocyanaten eingesetzt wird. Isocyanate setzen sich mit Verbindungen wie Polyolen oder Polyestern zu Polyurethanen um, wobei die chemische Struktur je nach den verwendeten Ausgangsverbindungen und dem Grad der Vernetzung sehr unterschiedlich sein kann. Erfindungsgemäß werden vorzugsweise Polyester mit einem mittleren Molekulargewicht zwischen 4 - 15 · 10³ g/mol auf der Basis von Adipinsäure und Ethylenglykol, Propylenglykol oder anderen zweiwertigen Diolen sowie aus Polyolen wie beispielsweise Trimethylpropan eingesetzt oder Polyester aus Phthalsäure oder anderen mehrfunktionellen Carbonsäuren und den angegebenen Di- oder Polyolen, wobei das Verhältnis von Carbonsäure zu Di- oder Polyolen etwa 1:1 beträgt. Die Herstellung dieser Polyester ist dem Fachmann geläufig und erfolgt in an sich bekannter Weise. Derartige Produkte sind auch im Handel von verschiedenen Herstellerfirmen erhältlich.

Statt freier Isocyanate können bei Einkomponentenlacken auch blockierte Isocyanate verwendet werden; unter blockierten Isocyanaten versteht man die Umsetzungsprodukte zwischen dem Isocyanat und OH-funktionellen Verbindungen, die oberhalb einer bestimmten Temperatur wieder abgespalten werden, so daß dann die Umsetzung beispielsweise mit einem Polyol oder Polyester erfolgen kann. Erfindungsgemäß werden vorzugsweise blockierte Isocyanate, nämlich Reaktionsprodukte aus Di- oder Polyisocyanaten wie NDl, die mit ε-Caprolactam oder anderen H-aciden Verbindungen blockiert sind eingesetzt, wobei die Herstellung solcher blockierter Isocyanate im stöchiometrischen Verhältnis von etwa 1:1 dem Fachmann bekannt ist und nach an sich bekanntem Verfahren erfolgt. Auch diese Produkte sind im Handel von verschiedenen Herstellern erhältlich. Grundsätzlich ist darauf zu achten, daß die eingesetzten Komponenten Polyester und Isocyanat hohe Elastizitätseigenschaften aufweisen, wobei diese Eigenschaft durch Auswahl der entsprechenden Umsetzungskomponenten beeinflußt werden kann. Dem Fachmann ist geläufig, daß ein höherer Anteil an aliphatischen Ausgangsverbindungen zu weicheren und elastischeren Produkten führt, während eine Erhöhung des aromatischen Anteils in derartigen Verbindungen härtere und damit weniger elastische Produkte ergibt.

Die erfindungsgemäß eingesetzten Lacke enthalten etwa 30 - 90, meist 50 - 70 Gew.-% Polyester und 5 - 40, meist 10 - 30 Gew.-% blockiertes Isocyanat in 10 - 50 Gew.-% Lösungsmittel. Als Lösungsmittel werden, wie bei Polyurethanlacken üblich, möglichst wasserfreie oder maximal einen Wassergehalt von 0,05% aufweisende Lösungsmittel ohne reaktive OH-Gruppen eingesetzt, wie aromatische Kohlenwasserstoffe, Ester, Ketone oder Etherester. Das Lösungsmittelgemisch ist von mittlerer Flüchtigkeit wobei die Einzelkomponenten Verdunstungszahlen von 20 - 3000 aufweisen.

Die Lacke enthalten etwa 0,1 - 1,5 Gew.-% Aktivator, und zwar vorzugsweise Dibutylzinnlaurat oder Zinkoctoat. Außerdem können die Lacke übliche Zusatzstoffe enthalten, wie beispielsweise niedermolekulare Epoxidharze als Haftvermittler in der Größenordnung von etwa 5 - 10 Gew.-% und zur Verbesserung der Gleitfähigkeit bei der maschinellen Verarbeitung 1 - 10 Gew.-% einer Mikrowachsemulsion und 0,5 - 1,5 Gew.-% Siloxane oder andere oberflächenaktive Siliconölderivate.

Derartige Lacke werden beispielsweise bei der Herstellung von Twist-Off-Deckeln anstelle der sonst als Schutzschicht verwendeten Klarlacke auf die im Offset-Verfahren bedruckten Blechtafeln in üblicher Weise auf den üblichen Lackiermaschinen aufgetragen, wobei der Auftrag in der Weise erfolgen sollte, daß die Schichtdicke unter 10 µm liegt, da bei stärkeren Schichten unter Umständen Verarbeitungsschwierigkeiten auftreten können.

Die Lacke entsprechen einem Klarlack in der bisher üblichen Art und wirken als Schutzlack bei der weiteren Bearbeitung der Metallplatten durch Tiefziehen oder andere Maßnahmen. Im Gegensatz zur bisherigen Technik weisen die so hergestellten Behälterverschlüsse aber einen beträchtlichen Antirutscheffekt auf, der noch nicht in allen Einzelheiten erklärt werden kann, aber offensichtlich mit der hohen Elastizität des aufgetragenen Schutzlackes zusammenhängt. Während die bisher üblichen Schutzlacke auf Metall-, Kunststoff- oder Glasflächen rutschen, lassen sich die mit den erfindungsgemäßen Verschlüssen versehenen Behälter auch ohne Zwischenlagen aus Karton, Pappe oder Papier aufeinanderstapeln und in geeigneter Weise wie beispielsweise Displaykartons ohne Folie weiterverpacken, da der Reibungskoeffizient gegenüber Kunststoff, Glas oder Metall über 0,31 beträgt.

Die Erfindung wird im folgenden anhand der Beispiele näher erläutert:

### Beispiel 1

In einem genügend dimensionierten Reaktor werden 100 kg eines Polyesters aus Adipinsäure und Diethylenglycol mit geringen Anteilen Trimethylolpropan und einem Molekulargewicht von etwa 6000 in einer Aromatenmischung aus C₁₀ bis C₁₃ Aromaten, wie sie von der Exxon Corp. unter der Marke "Solvesso" gehandelt werden, gelöst. Zu den vorgelegten Polyestern werden innerhalb einer Stunde 120 kg eines ε-caprolactamblockierten lsocyanatgemisches aus NDl und H ₁₂ NDl zudosiert.

Nach weiterem 30-minütigen Rühren werden, bezogen auf die Gesamtmasse, 0,1 Gew.-% Dibutylzinnlaurat und zur Verbesserung der Gleitfähigkeit 5 Gew.-% einer Mikrowachsemulsion und 0,5 Gew.-% Silicone zugegeben.

Die Mischung wird 24 Stunden der Reifung überlassen und dann mit Lösungsmitteln auf die gewünschte Viskosität eingestellt.

### Beispiel 2

Anstelle des Beispiel 1 erwähnten Polyestergemisches aus Adipinsäure, Diethylenglycol und Trimethylolpropan wird ein Estergemisch aus Phthalsäure und 1,3-Propylenglycol wie angegeben gelöst und in gleicher Weise, wie in Beispiel 1 beschrieben, mit einem geblockten Isocyanat aus 4,4' - Methylenbis- (cyclohexylisocyanat) umgesetzt.

### Beispiel 3

Zur Ermittlung der Antirutschwirkung wurde ein Papptray mit zehn Gläsern, einem Gewicht von 5,8 kg und einer Größe von 160 x 380 mm auf Verschlüssen, auf die ein üblicher Klarlack aufgetragen war, in Bewegung gebracht. Der Reibungskoeffizient bei den üblichen Klarlacken beträgt etwa 0,29-0,31.

Dasselbe Experiment wurde wiederholt, wobei allerdings diesmal die Verschlüsse, auf denen der Tray in Bewegung gebracht wurde, mit einem erfindungsgemäßen Antirutschlack beschichtet waren. Bevor sich der Tray in Bewegung setzte, mußte eine Zugkraft von 3,7 kg aufgewendet werden, was einem Reibungskoeffizienten von 0,63 entspricht.

## Patentansprüche

1. Behälterverschlüsse, **gekennzeichnet durch** eine Lackbeschichtung zur Antirutschausrüstung auf Basis von Polymeren aus gesättigten aliphatischen oder gemischt aliphatisch-aromatischen Polyestern mit einem mittleren Molekulargewicht von 4 - 15 10³ g/mol und blockierten oder nicht blockierten aromatischen oder cycloaliphatischen Isocyanaten.

2. Behälterverschlüsse nach Anspruch 1, **dadurch gekennzeichnet, daß** der Beschichtungslack etwa 30 - 90, meistens 50 - 70 Gew.-% Polyester und 5 - 40, meist 10 - 30 Gew.-% blockiertes Isocyanat in 10 - 50 Gew.-% Lösungsmittel enthält.

3. Behälterverschlüsse nach Anspruch 1 oder 2, **dadurch gekennzeichnet, daß** der Beschichtungslack ein Lösungsmittel oder Lösungsmittelgemische mit einer Verdunstungszahl von 100 bis 3000 enthält.

4. Behälterverschlüsse nach Anspruch 1 bis 3, **dadurch gekennzeichnet, daß** die Schichtdicke des Lackes nicht über 10 µm beträgt.

5. Behälterverschlüsse nach Anspruch 1 bis 4, **dadurch gekennzeichnet, daß** der Reibungskoeffizient über 0,31 beträgt.
